# EUROPÄISCHE PATENTSCHRIFT

(11) **EP 2 801 489 B1**
(45) Veröffentlichungstag und Bekanntmachung des Hinweises auf die Patenterteilung: **18.12.2019**
(21) Anmeldenummer: 14166991.1
(22) Anmeldetag: 05.05.2014
(51) Int. Cl.: B60D 1/30, B60D 1/48, B60D 1/62, B62D 6/00, B62D 13/00, B60D 1/00

(54) **FLURFÖRDERZEUG FÜR EINEN ROUTENZUG**
INDUSTRIAL TRUCK FOR A ROUTE TRAIN
CHARIOT DE MANUTENTION POUR UN CHARIOT TRACTEUR

(30) Priorität: 08.05.2013 DE 102013007854
(43) Veröffentlichungstag der Anmeldung: 12.11.2014
(73) Patentinhaber: Jungheinrich Aktiengesellschaft, 22047 Hamburg (DE)
(72) Erfinder: Kuschel, Kai, 29525 Uelzen (DE); Ziemann, Jörg, 21149 Hamburg (DE)
(74) Vertreter: Hauck Patentanwaltspartnerschaft mbB

(56) Entgegenhaltungen:
- DE-A1- 10 108 382
- DE-A1-102006 018 389
- DE-A1-102008 043 675
- DE-U1-202012 002 489
- US-A1- 2009 045 603

## Beschreibung

Die vorliegende Erfindung betrifft ein Flurförderzeug, insbesondere ein Schleppfahrzeug, um einen oder mehrere Anhänger in einem Routenzug zu schleppen. Das Flurförderzeug weist eine Kurvensteuerung auf, die für eine Kurvenfahrt mindestens einen maximal zulässigen Wert eines Fahrparameters reduziert.

Aus "Hebezeuge und Fördermittel", Berlin 43 (2003) 7-8, S. 340, 341 sind Gabelstapler für eine sichere Kurvenfahrt bekannt. Bei dem bekannten Gabelstapler erfolgt eine automatische Reduzierung der Geschwindigkeit in Abhängigkeit von einem Lenkwinkeln. Bei dem bekannten System wird zur Erhöhung der Standsicherheit die Fahrgeschwindigkeit des Gabelstaplers bei Kurvenfahrt in Abhängigkeit von Fahrgeschwindigkeit, Lenkwinkel und auch Lenkgeschwindigkeit auf einen Wert reduziert, bei dem die Standsicherheit in jeder Phase der Kurvenfahrt gewährleistet ist und das Fahrzeug nicht kippt.

Auch bei Routenzuganhängern, deren Schlepper über eine Kurvensteuerung verfügt, können beim Schleppen instabile Zustände für die geschleppten Anhänger auftreten.

Der Erfindung liegt daher die Aufgabe zugrunde, ein Schleppfahrzeug, um mehrere Anhänger in einem Routenzug zu schleppen, zur Verfügung zu stellen, bei dem eine Kurvensteuerung nicht nur die Standfestigkeit des Fahrzeugs sicherstellt, sondern ebenfalls die Standfestigkeit der Anhänger mit möglichst einfachen Mitteln in einer Kurvenfahrt sicherstellt.

Aus DE 101 08 382 ist eine bewegliche Anhängerkupplung zur Vermeidung von Pendelbewegungen bei Fahrzeuggespannen bekannt worden. Durch eine Verstellung der Anhängerkupplung quer zur Fahrzeuglängsrichtung kann einer Pendelbewegung entgegengewirkt werden. Ausgelöst wird die Ansteuerung der Anhängerkupplung über ein am Zugfahrzeug befindliches ESP-System, das abhängig von einer Drehrate des Fahrzeugs um seine Hochachse und eventuell auftretende Beschleunigung quer zur Längsachse des Fahrzeugs, ESP-Aktuatoren ansteuert. Aus der DE 10 2006 018 389 A1 ist ebenfalls ein Schleppfahrzeug gemäß dem Oberbegriff bekannt

Erfindungsgemäß wird die Aufgabe durch ein Flurförderzeug mit den Merkmalen aus Anspruch 1 gelöst. Vorteilhafte Ausgestaltungen bilden den Gegenstand der Unteransprüche.

Das erfindungsgemäße Flurförderzeug ist vorgesehen und bestimmt, um einen oder mehrere Anhänger gemeinsam in einem Routenzug zu schleppen. Im besonderen Maße betrifft die Erfindung Schleppfahrzeuge. Das erfindungsgemäße Fahrzeug ist für eine Kurvenfahrt mit einer Kurvensteuerung ausgestattet, die für die Kurvenfahrt mindestens einen maximal zulässigen Wert eines Fahrparameters reduziert. Die Kurvensteuerung kann in an sich bekannter Art und Weise arbeiten und auf ein Signal ansprechen, dass das Fahrzeug sich in einer Kurvenfahrt befindet oder eine Kurvenfahrt bevorsteht. Erfindungsgemäß ist die Kurvensteuerung des Fahrzeugs zusätzlich mit einem Signaleingang für ein Anhängerkurvensignal ausgestattet. Das Anhängerkurvensignal zeigt für einen der geschleppten Anhänger dessen Kurvenfahrt an. Ansprechend auf das Anhängerkurvensignal stellt die Kurvensteuerung sicher, dass die Reduktion des maximal zulässigen Werts des Fahrparameters erst wieder aufgehoben wird, wenn das an dem Signaleingang anliegende Anhängerkurvensignal anzeigt, dass keiner der Anhänger sich mehr in einer Kurvenfahrt befindet. Die Kurvensteuerung des erfindungsgemäßen Flurförderzeugs stellt sicher, dass der bei der Kurvenfahrt des Flurförderzeugs reduzierte maximal zulässige Wert des Fahrparameters solange weiter reduziert bleibt, wie sich mindestens einer der Anhänger in der Kurvenfahrt befinden. Der erfindungsgemäßen Lösung, über einen Signaleingang für das Anhängerkurvensignal bietet den Vorteil, dass der Routenzug nicht unnötig lange mit gedrosseltem Fahrparameter betrieben wird, sondern ein regulärer Fahrbetrieb wieder aufgenommen werden kann, sobald sämtliche Anhänger die Kurvenfahrt verlassen haben.

In einer bevorzugten Ausgestaltung ist für den zu reduzierenden, maximal zulässigen Wert des Fahrparameters die maximal zulässige Höchstgeschwindigkeit, die maximal zulässige Beschleunigung oder der maximal zulässige Lenkwinkel vorgesehen. Auch mehrere dieser Fahrparameter können gleichzeitig reduziert werden. Die maximal zulässige Höchstgeschwindigkeit ist der Wert für die Geschwindigkeit, mit der das Fahrzeug höchstens fahren kann.

Der Wert für die maximal zulässige Beschleunigung begrenzt die Beschleunigung des Fahrzeugs auf diesen Wert. Ebenso begrenzt der Wert für den maximal zulässigen Lenkwinkel den möglichen Lenkwinkel an dem Fahrzeug.

In einer bevorzugten Weiterbildung erhöht die Kurvensteuerung, ansprechend auf ein Ende der Kurvenfahrt bei sämtlichen Anhängern den oder die zuvor reduzierten Fahrparameter. Die Erhöhung des zuvor reduzierten Fahrparameters kann hierbei sprunghaft oder stetig ansteigend erfolgen. Durch die Erhöhung des zuvor reduzierten Fahrparameters mit Beendigung der Kurvenfahrt kann der mit dem erfindungsgemäßen Fahrzeug gebildete Routenzug wieder regulär fahren.

In einer bevorzugten Weiterbildung des erfindungsgemäßen Flurförderzeugs ist die Kurvensteuerung ausgebildet, selbsttätig eine Kurvenfahrt des Fahrzeugs zu erkennen. Die Kurvenfahrt der geschleppten Anhänger wird über das Anhängerkurvensignal an einem Signaleingang der Kurvensteuerung erkannt.

In einer bevorzugten Ausgestaltung wertet die Kurvensteuerung den Lenkwinkel des Flurförderzeugs aus, um dessen Kurvenfahrt zu erkennen. Zusätzlich kann noch die Fahrgeschwindigkeit erfasst und berücksichtigt werden. Selbstverständlich sind auch andere Ansätze, wie beispielsweise Beschleunigungssensoren möglich, um die Kurvenfahrt des Anhängers zu erkennen.

Die erfindungsgemäße Aufgabe wird ebenfalls durch einen Routenzug mit einem Flurförderzeug und mindestens einem Anhänger mit den Merkmalen aus Anspruch 6 gelöst.

Der mindestens eine Anhänger des Routenzugs ist mit einer Schleppdeichsel ausgestatte, über die er mit einem schleppenden Fahrzeug, sei es ein weiterer Anhänger oder ein angetriebenes Schleppfahrzeug verbunden ist. Der Anhänger weist einen Kurvensensor auf, der auf eine Kurvenfahrt mit mehr als einen Mindestwinkel anspricht. Ferner sind elektrische Verbindungskontakte zu einem schleppenden Fahrzeug vorgesehen, an denen ein von dem Kurvensensor generiertes Anhängerkurvensignal anliegt. Über das an den elektrischen Verbindungskontakten anliegende Anhängerkurvensignal wird angezeigt, dass der Anhänger sich noch in einer Kurvenfahrt befindet. Hierdurch erhält eine Kurvensteuerung in dem schleppenden Fahrzeug die Möglichkeit, einen maximal zulässigen Wert für einen Fahrparameter zu reduzieren, so dass auch der Anhänger in seiner Kurvenfahrt eine ausreichende Standsicherheit besitzt. Bevorzugt ist als Kurvensensor ein Deichselsensor vorgesehen, der eine Auslenkung der Deichsel erfasst.

In einer bevorzugten Weiterbildung ist der Anhänger mit weiteren elektrischen Verbindungskontakten ausgestattet, an denen ein Anhängerkurvensignal eines geschleppten Anhängers angelegt werden kann. Dabei sind der Kurvensensor und die weiteren elektrischen Verbindungskontakte in Reihe geschaltet, so dass an den elektrischen Verbindungskontakten zu dem schleppenden Fahrzeug ein Anhängerkurvensignal anliegt, wenn der Kurvensensor des Anhängers ein Anhängerkurvensignal generiert oder ein Anhängerkurvensignal eines geschleppten Anhängers anliegt. Lediglich in dem Fall, dass der Kurvensensor des Anhängers kein Anhängerkurvensignal anzeigt und von dem geschleppten Anhänger kein Anhängerkurvensignal an den weiteren elektrischen Verbindungskontakten anliegt, wird auch kein Anhängerkurvensignal an den vorausfahrenden Anhänger oder das Schleppfahrzeug weitergeleitet.

In einer bevorzugten Ausgestaltung des Anhängers sind die elektrischen Verbindungskontakte mit einem Steckverbinder ausgestattet. Die weiteren elektrischen Kontakte sind mit einem korrespondierenden Steckverbinder ausgestattet. Über die Steckverbinder können die aneinander hängenden Anhänger leicht elektrisch miteinander verbunden werden und so die Anhängerkurvensignale weiterleiten.

In einer bevorzugten Ausgestaltung ist der Kurvensensor als ein Schalter vorgesehen, der bei einer Auslenkung der Deichsel um mehr als den vorbestimmten Minimalwinkel schaltet. Auf diese Weise kann mit einfachen Mitteln das Kurvenfahrtsignal des Anhängers erzeugt und weitergeleitet werden.

Alternativ oder zusätzlich ist ein Winkelsensor vorgesehen, der eine Winkelmesseinrichtung aufweist. An den elektrischen Kontakten zu dem schleppenden Fahrzeug liegt das Maximum aus den Winkelwerten an, der an der Messeinrichtung des Anhängers gemessen wurde und der von einem anderen Anhänger an den weiteren elektrischen Kontakten anliegt. Durch die Weiterleitung des Maximalwerts des Winkels ist sichergestellt, dass am schleppenden Fahrzeug der Winkelwert des Anhängers zur Verfügung steht, der am stärksten eingelenkt ist.

Ein bevorzugtes Ausführungsbeispiel wird nachfolgend anhand der Figuren näher erläutert. Es zeigen:
- Fig. 1: einen Routenzug mit einem Schleppfahrzeug und fünf Anhängern in einer Ansicht von der Seite,
- Fig. 2: ein schematisches Blockschaltbild zu dem Routenzug aus Fig. 1 und
- Fig. 3: eine perspektivische Ansicht von schräg vorne zu einem Portalanhänger.

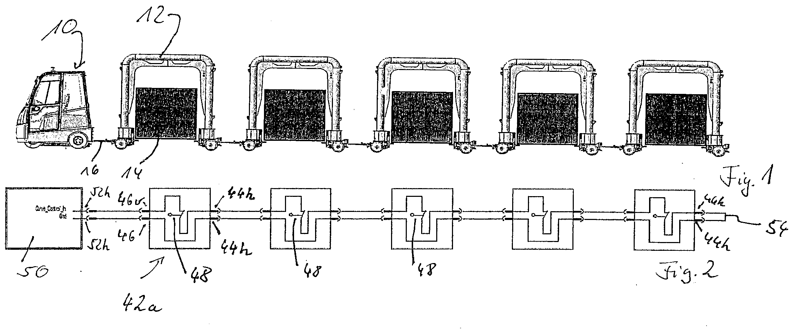

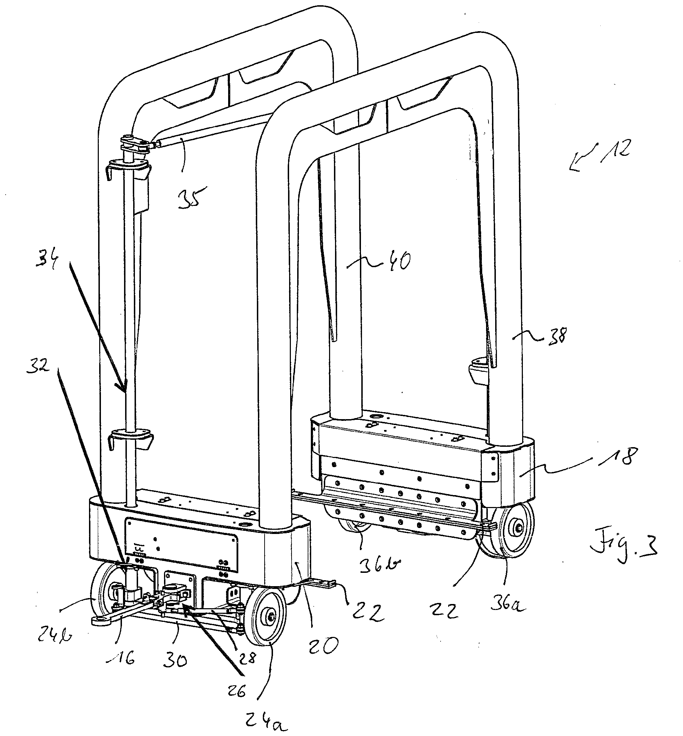

Fig. 1 zeigt einen Routenzug mit einem Schleppfahrzeug 10 und fünf Portalanhängern 12. Die Portalanhänger besitzen jeweils einen für den Transport aufgenommenen Innenwagen 14. Das Schleppfahrzeug besitzt ein dreirädriges Fahrwerk, wobei zwei Räder an der zu den Anhängern 12 weisenden Seite des Fahrzeugs 10 angeordnet sind. Das Schleppfahrzeug 10 besitzt ebenfalls eine Anhängerkupplung (nicht dargestellt), über die die Deichsel 16 des Anhängers 12 mit dem Schleppfahrzeug 10 verbunden ist. Die in Fig. 1 dargestellten Portalanhänger 12 sind baugleich. In Fig. 3 ist zu erkennen, dass jeder der Portalanhänger 12 einen vorderen Anhängerabschnitt 20 und einen hinteren Anhängerabschnitt 18 besitzt. Jeder der Anhängerabschnitte besitzt eine Hubleiste 22, über die ein zwischen dem vorderen und dem hinteren Anhängerabschnitt angeordneter Innenwagen angehoben werden kann. Jeder Anhängerabschnitt 18, 20 besitzt ein Paar 24 von gelenkten Rädern. Die Deichsel 16 ist an dem vorderen Anhängerabschnitt 20 in einem Deichsellager 26 gelagert. Der Deichselstiel ist über eine Gelenkstange 28 mit dem Rad 24a verbunden. Das Rad 24a ist über eine zweite Gelenkstange 30 mit dem Rad 24b verbunden. Durch eine Auslenkung der Deichsel 16 wird die Drehbewegung über die Lenkstange 28 auf das Rad 24a und von dort über die Gelenkstange 30 auf das Rad 24b übertragen. Die Lenkbewegung des Rades 24b wird über eine Kopplungseinrichtung 32 auf eine Kopplungsstange 34 übertragen. Über eine Hebelgestänge 35 wird die Drehbewegung des Rades 24b zu dem hinteren Anhängerabschnitt 18 übertragen, wo die Räder 36a und 36b entsprechend der Auslenkung des Rades 24b ausgelenkt werden. Der vordere Anhängerabschnitt und der hintere Anhängerabschnitt sind über zwei portalförmige Bögen 38 und 40 miteinander verbunden. Zwischen den Portalbögen 38 und 40 kann der zu transportierende Innenwagen 14 eingeschoben werden.

Entlang der Übertragung der Lenkbewegung der Deichsel 16 über die Räder an dem vorderen Anhängerabschnitt 20 bis zum hinteren Anhängerabschnitt 18 und dessen Rädern 36a und 36b kann ein Kurvensensor vorgesehen sein. Der als Deichselschalter ausgebildete Kurvensensor öffnet beispielsweise, wenn eine Lenkung des Portalanhängers um mehr als einen vorbestimmten Minimalwinkel erfolgt. Der geöffnete Deichselschalter kann dann von dem Schleppfahrzeug 10 detektiert werden.

Fig. 2 zeigt beispielsweise eine entsprechende Schaltungsanordnung. Die Schaltung 42a besitzt zwei vordere elektrische Kontakte 46v und zwei hintere elektrische Kontakte 44h. Von diesen Kontaktpaaren ist jeweils einer der Kontakte direkt mit einem Kontakt des anderen Kontaktpaares verbunden, während in die Verbindung der anderen Kontakte ein Deichselschalter 48a gesetzt ist. An dem Schaltkreis 50 des Schleppfahrzeugs 10 liegt an den hinteren elektrischen Kontakten 52h eine vorbestimmte Gleichspannung an.

Wie in Fig. 2 zu erkennen, sind an dem letzten geschleppten Fahrzeug die Kontakte 44h über ein Brückenelement 54 miteinander kurzgeschlossen. Im Betrieb detektiert der im Schleppfahrzeug befindliche Schaltkreis 50 die angelegte Spannung an seinen Kontakten 52h nur dann, wenn sämtliche Deichselschalter 48 geschlossen sind. Dies bedeutet, das Spannungssignal liegt an der Schaltung 50 vor, wenn keiner der Anhänger um mehr als seinen Minimalwinkel ausgelenkt ist. Sobald bei einer Kurvenfahrt ein Fahrzeug stärker auslenkt, wird der zugehörige Schalter 48 geöffnet und der Stromkreis ist unterbrochen.

Wird die Deichselstellung der Anhänger nicht durch einen Schalter überprüft, sondern über einen Sensor erkannt und der Lenkwinkel erfasst, so werden die erfassten Lenkwinkel entsprechend ausgewertet. Hierzu ist es beispielsweise möglich, dass ein Anhänger den an den Kontakten 44h anliegenden Sensorwert mit dem an dem Fahrzeug selbst festgestellten Wert vergleicht und das Maximum beider Werte an seine Anschlüsse 46v anlegt. Auf diese Weise gelangt zu der Fahrzeugsteuerung im Schleppfahrzeug der maximale Lenkausschlag der Anhänger. Die Steuerung kann, wenn dieser maximale Winkel einen vorbestimmten Minimalwinkel überschreitet, als Anlass dienen, weiterhin mit reduzierten, maximal zulässigen Wert für den Fahrparameter zu fahren.

Alternativ ist es auch möglich, dass keine Maximumsbildung in den einzelnen Anhängern erfolgt, sondern sämtliche Werte der Winkelsensoren weitergeleitet werden.

Ein Vorteil der Verwendung von Sensoren als Winkelgeber wird deutlich, wenn man einen in einer Kurve abgestellten und abgeschalteten Routenzug betrachtet. In diesem Fall kann bei einem Wiedereinschalten und einer Wiederinbetriebnahme des Routenzuges die genaue Position der Anhänger ausgelesen werden und, um festzustellen, dass der Zug in einer Kurve steht. Dies erlaubt es, mit einer angemessenen Geschwindigkeit anzufahren. Bei der Verwendung eines Deichselschalters, wie beispielsweise in Fig. 2 dargestellt, besteht die Möglichkeit, bei der Wiederinbetriebnahme zu überprüfen, ob alle Schalter geschlossen sind.

Um eine Mittelstellung der Deichsel festzustellen, kann mechanisch oder elektronisch ein Winkelbereich eingestellt werden, in dem die Deichselsensoren, sei es als Schalter oder als Winkelgeber, kein Signal erzeugen. Dieser Totbereich, in dem noch keine Kurvenfahrt des Anhängers vorliegt, dient dazu, dass der Schlepper bei leichtem Umfahren von Hindernissen nicht sofort gedrosselt wird, sondern eine Drosselung nur in Kurven auftritt.

### Bezugszeichenliste

- 10: Schleppfahrzeug
- 12: Portalanhänger
- 14: Innenwagen
- 16: Deichsel
- 18: hinterer Anhängerabschnitt
- 20: vorderer Anhängerabschnitt
- 22: Hubleiste
- 24: Paar gelenkter Räder
- 26: Deichsellager
- 28: Gelenkstange
- 30: zweite Gelenkstange
- 32: Kopplungseinrichtung
- 34: Kopplungsstange
- 35: Hebelgestänge
- 36a: Rad
- 36b: Rad
- 38: Bogen
- 40: Bogen
- 42a: Schaltung
- 44h: hintere elektrische Kontakte
- 46v: vordere elektrische Kontakte
- 48a: Deichselschalter
- 50: Schaltkreis
- 52h: hinterer elektrischer Kontakt

## Patentansprüche

1. Flurförderzeug, das als ein Schleppfahrzeug ausgebildet ist, um mehrere Anhänger (12) in einem Routenzug zu schleppen, wobei eine Kurvensteuerung vorgesehen ist, die für eine Kurvenfahrt einen maximal zulässigen Wert für mindestens einen Fahrparameter reduziert
**dadurch gekennzeichnet, dass**
die Kurvensteuerung zusätzlich einen Signaleingang für ein Anhängerkurvensignal aufweist, das für einen der geschleppten Anhänger (12) eine Kurvenfahrt anzeigt, wobei die Kurvensteuerung die Reduktion des maximal zulässigen Werts des Fahrparameters erst aufhebt, wenn das an dem Signaleingang anliegende Kurvensignal anzeigt, dass keiner der Anhänger (12) sich in Kurvenfahrt befindet.

2. Flurförderzeug nach Anspruch 1, **dadurch gekennzeichnet, dass** der maximal zulässige Wert des Fahrparameters die maximal zulässige Höchstgeschwindigkeit, die maximal zulässige Beschleunigung, der maximal zulässige Lenkwinkel oder eine Kombination dieser Größen ist.

3. Flurförderzeug nach Anspruch 1 oder 2, **dadurch gekennzeichnet, dass** die Kurvensteuerung, ansprechend auf ein Ende der Kurvenfahrt, den reduzierten Fahrparameter ansteigend oder stufenweise erhöht.

4. Flurförderzeug nach einem der Ansprüche 1 bis 3, **dadurch gekennzeichnet, dass** die Kurvensteuerung eine Kurvenfahrt des Flurförderzeugs selbst erfasst.

5. Flurförderzeug nach Anspruch 4, **dadurch gekennzeichnet, dass** die Kurvensteuerung den Lenkwinkel auswertet, um eine Kurvenfahrt zu erfassen.

6. Routenzug mit einem Flurförderzeug nach einem der Ansprüche 1 bis 5 und mindestens einem Anhänger (12), der eine Deichsel (16) aufweist, **dadurch gekennzeichnet, dass** ein Kurvensensor, der auf eine Kurvenfahrt mit mehr als einen vorbestimmtem Minimalwinkel anspricht, und elektrische Verbindungskontakte zu einem schleppenden Fahrzeug vorgesehen sind, an denen ein Anhängerkurvensignal des Kurvensensors anliegt.

7. Routenzug nach Anspruch 6, **dadurch gekennzeichnet, dass** der Kurvensensor als ein Deichselsensor ausgebildet ist, der eine Auslenkung der Deichsel (16) erfasst.

8. Routenzug nach Anspruch 6 oder 7, **dadurch gekennzeichnet, dass** weitere elektrische Verbindungskontakte vorgesehen sind, an denen ein Anhängerkurvensignal eines geschleppten Anhängers (12) angelegt werden kann, wobei der Deichselsensor und die weiteren elektrischen Verbindungskontakte in Reihe geschaltet sind.

9. Routenzug nach einem der Ansprüche 6 bis 8, **dadurch gekennzeichnet, dass** die elektrischen Verbindungskontakte einen Steckverbinder aufweisen und die weiteren elektrischen Verbindungskontakte einen korrespondierenden Steckverbinder besitzen.

10. Routenzug einem der Ansprüche 6 bis 9, **dadurch gekennzeichnet, dass** als Winkelsensor ein Schalter vorgesehen ist, der bei einer Auslenkung der Deichsel (16) um mehr als einen vorbestimmten Minimalwinkel schaltet.

11. Routenzug nach einem der Ansprüche 6 bis 10, **dadurch gekennzeichnet, dass** als Winkelsensor eine Winkelmesseinrichtung vorgesehen ist, wobei an den elektrischen Kontakten zu dem schleppenden Fahrzeug das Maximum aus dem gemessenen Winkel der Winkelmesseinrichtung und einem an den weiteren elektrischen Kontakten anliegenden Messwert anliegt.

## Claims

1. Industrial truck which is designed as a towing vehicle for towing a plurality of trailers (12) in a route train, wherein a curve control is provided which reduces a maximum permissible value for at least one driving parameter for a trip around a curve
**characterised in that**
the curve control additionally has a signal input for a trailer curve signal which indicates a turning movement for one of the towed trailers (12), wherein the curve control does not cancel the reduction of the maximum permissible value of the driving parameter until the curve signal present at the signal input indicates that none of the trailers (12) is in a turning movement.

2. Industrial truck according to claim 1, **characterised in that** the maximum permissible value of the driving parameter is the maximum permissible speed, the maximum permissible acceleration, the maximum permissible steering angle or a combination of these.

3. Industrial truck according to claim 1 or 2, **characterised in that** the curve control, in response to an end of the turning movement, increases the reduced driving parameter in ascending or stepwise manner.

4. Industrial truck according to one of claims 1 to 3, **characterised in that** the curve control detects a turning movement of the industrial truck itself.

5. Industrial truck according to claim 4, **characterised in that** the curve control evaluates the steering angle in order to detect turning movement

6. Route train with an industrial truck according to one of claims 1 to 5 and at least one trailer (12) which has a drawbar (16), **characterized in that** a curve sensor which responds to a turning movement with more than a predetermined minimum angle and electrical connection contacts to a towing vehicle are provided to which a trailer curve signal of the curve sensor is applied.

7. Route train according to claim 6, **characterized in that** the curve sensor is designed as a drawbar sensor which detects a deflection of the drawbar (16).

8. Route train according to claim 6 or 7, **characterized in that** further electrical connection contacts are provided to which a trailer curve signal of a towed trailer (12) can be applied, the drawbar sensor and the further electrical connection contacts being connected in series.

9. Route train according to one of claims 6 to 8, **characterized in that** the electrical connecting contacts have a plug connector and the further electrical connecting contacts have a corresponding plug connector.

10. Route train according to one of claims 6 to 9, **characterized in that** a switch is provided as an angle sensor, which switches when the drawbar (16) is deflected by more than a predetermined minimum angle.

11. Route train according to one of claims 6 to 10, **characterized in that** an angle measuring device is provided as an angle sensor, wherein the maximum of the measured angle of the angle measuring device and a measured value applied to the further electrical contacts is applied to the electrical contacts to the towing vehicle.

## Revendications

1. Chariot de manutention, qui est conçu comme un véhicule tracteur pour tracter plusieurs remorques (12) intégrées à un train logistique, dans lequel une commande de virage est prévue, qui réduit une valeur maximale admissible d'au moins un paramètre de conduite pour négocier un virage,
**caractérisé en ce que**
la commande de virage présente une entrée de signal destinée à un signal de virage de remorque, qui indique un virage à négocier à l'une des remorques (12) tractées, dans lequel la commande de virage ne met fin à la réduction de la valeur maximale admissible du paramètre de conduite que lorsque le signal de virage délivré à l'entrée de signal indique qu'aucune des remorques (12) ne se trouve dans un virage à négocier.

2. Chariot de manutention selon la revendication 1, **caractérisé en ce que** la valeur maximale admissible du paramètre de conduite est la vitesse maximale admissible, l'accélération maximale admissible, l'angle de braquage maximal admissible ou une combinaison de ces grandeurs.

3. Chariot de manutention selon la revendication 1 ou 2, **caractérisé en ce que** la commande de virage réagissant à une fin du virage négocié augmente progressivement ou par paliers le paramètre de conduite réduit.

4. Chariot de manutention selon l'une des revendications 1 à 3, **caractérisé en ce que** la commande de virage détecte elle-même un virage négocié par le chariot de manutention.

5. Chariot de manutention selon la revendication 4, **caractérisé en ce que** la commande de virage analyse l'angle de braquage pour détecter un virage à négocier.

6. Train logistique doté d'un chariot de manutention selon l'une des revendications 1 à 5 et d'au moins une remorque (12), qui présente un timon (16), **caractérisé en ce qu'**un détecteur de virage, qui réagit à un virage négocié à un angle supérieur à un angle minimal prédéfini, et des contacts de connexion électriques avec un véhicule tractant sont prévus, auxquels un signal de virage de remorque du détecteur de virage est délivré.

7. Train logistique selon la revendication 6, **caractérisé en ce que** le détecteur de virage est conçu sous la forme d'un détecteur de timon, qui enregistre une déviation du timon (16).

8. Train logistique selon la revendication 6 ou 7, **caractérisé en ce que** d'autres contacts de connexion électriques sont prévus, auxquels un signal de virage d'une remorque tractée (12) peut être délivré, dans lequel le détecteur de timon et les autres contacts de connexion électriques sont montés en série.

9. Train logistique selon l'une des revendications 6 à 8, **caractérisé en ce que** les contacts de connexion électriques présentent un connecteur enfichable et les autres contacts de connexion électriques comportent un connecteur enfichable correspondant.

10. Train logistique selon l'une des revendications 6 à 9, **caractérisé en ce qu'**un commutateur est prévu comme détecteur d'angle de braquage, qui s'active lorsque le timon (16) est dévié de plus d'un angle minimal prédéfini.

11. Train logistique selon l'une des revendications 6 à 10, **caractérisé en ce qu'**un dispositif de mesure angulaire est prévu comme détecteur d'angle de braquage, dans lequel les contacts électriques avec le véhicule tractant sont soumis à l'impulsion maximale découlant de l'angle mesuré du dispositif de mesure angulaire et d'une valeur de mesure appliquée aux autres contacts électriques.
